# EUROPEAN PATENT SPECIFICATION

(11) **EP 2 400 749 B1**
(45) Date of publication and mention of the grant of the patent: **01.05.2013**
(21) Application number: 10167121.2
(22) Date of filing: 24.06.2010
(51) Int. Cl.: H04N 7/14, H04N 7/00

(54) **Access network controls distributed local caching upon end-user download**
Über Netzwerkzugangssteuervorrichtung verteilte lokale Zwischenspeicherung auf Endnutzer-Download
Contrôles de réseau d'accès distribués avec mise en cache locale pour le téléchargement d'utilisateur final

(43) Date of publication of application: 28.12.2011
(73) Proprietor: Koninklijke KPN N.V., 2516 CK The Hague (NL)
(72) Inventor: Steenbergen, van, Ate, 9737 NN, Groningen (NL); Alberts, Albert, 9751 TC, Haren (NL); Keijzer, Herman, 9727 DN, Groningen (NL)
(74) Representative: Wuyts, Koenraad Maria

(56) References cited:
- EP-A1- 1 499 089
- WO-A1-2004/100010
- WO-A2-02/058360
- WO-A2-03/005244
- WO-A2-2006/057981
- GB-A- 2 412 279
- CHI HUN LEE ET AL: "A Peer to Peer Prefix Patching Scheme for VOD Servers" INFORMATION TECHNOLOGY: NEW GENERATIONS, 2006. ITNG 2006. THIRD INTERN ATIONAL CONFERENCE ON LAS VEGAS, NV, USA 10-12 APRIL 2006, IEEE, PISCATAWAY, NJ, USA, 10 April 2006 (2006-04-10), pages 530-534, XP010911408 ISBN: 978-0-7695-2497-9

## Description

### FIELD OF THE INVENTION

The invention relates to a method of controlling delivery of an item of electronic content information via a data network to a plurality of data processing devices. The method also relates to a data processing system, and to control software on a computer-readable medium.

### BACKGROUND ART

The Internet can be considered a collection of different, independent network systems that are interconnected through the backbone network. A network system connects to the backbone network through a gateway. A network system may comprise multiple networks, and each thereof may include a plurality of sub-networks. The network systems are independent in the sense that the network systems can be managed separately and independently of one another. Different ones of the network systems may have different routing protocols. In the field of telecommunications, the entity referred to above as a "network system" is often called an "access network". In the text below, the expression "access network" will be used to refer to the network system that connects the end-users to the backbone network.

Data traffic over a data network, such as the Internet, has been growing at a tremendous rate over the last two decades. A major driving force behind this growth is the increasing availability of electronic content information, such as still pictures, audio files and especially video files, to the general public and distributed via the Internet by dedicated services or communicated via the Internet from one end-user to one or more other end-users in a peer-to-peer (P2P) data transfer. The ever increasing rate of data traffic represents serious challenges to the operator of the data network with regard to bandwidth requirements.

US published patent application 2002/0162109 A discloses an electronic content delivery system that uses a network of end-user devices around a hub. Each end-user device has storage capability. Content is stored in a distributed fashion on the network of these end-user devices for being made available to individual ones of these devices in a peer-to-peer (P2P) fashion so as to cut download time, reduce transmission errors and data traffic is restricted to the local network of end-user devices.

### SUMMARY OF THE INVENTION

The inventors have realized that the consumption of electronic content information, supplied by a server of a popular website to a large number of requesting clients via the Internet, gives rise to a number of problems.

As already mentioned above, one problem relates to the bandwidth required for the transfer of large amounts of data, requested by a large number of clients, from the server of a popular website, e.g., YouTube, to the access network that connects the clients to the Internet. Transfer of a massive amount of data may cause serious congestion or latency upstream of the access network.

Another problem relates to the managing of a large number of substantially simultaneous requests for the streaming of a specific item of content information. A content provider will only be able to honor a large number of requests if he has enough streaming servers available in order to match the Input/Output (I/O) bandwidth required from the storage at the server. I/O-intensive streaming services, such as video-on-demand (VoD), are usually constrained by the I/O of the server's storage, e.g., one or more hard disks, and by the network I/O-bandwidth at the communication ports of the server. Note within this context, that a typical streaming server uses a unicast protocol to send a separate copy of the media stream from the server to each individual one of the requesting clients. Most Internet connections use unicast. Unicast does not scale well when large numbers of clients want to view the same program concurrently. Using additional streaming caches at nodes in the data network between the content provider and the requesting client, e.g., in the access network (for example at a proxy server in the core network or at a network switch, e.g., a Digital Subscriber Line Access Multiplexer (DSLAM), would merely transfer the I/O-problem from the server of the content provider to the caching node.

The inventors therefore propose another approach based on intelligently populating the local storage of end-user devices with items of electronic content information for serving the community of end-user devices using the same access network. The local storage of a specific one of the end-user devices is populated with one or more items explicitly requested by that specific end-user. The access network monitors the data traffic between the end-user devices and one or more servers on the Internet, and logs in a registry which specific items have been supplied by the servers to the specific end-user. The end-user device of the specific end-user stores the items in local storage. The stored item remains accessible to other end-users from the local storage of the end-user device of this specific end-user. When another end-user issues a request for an item of electronic content information, the access network intercepts the request and verifies if the item was previously received by another end-user and, if so, redirects the request to the other end-user. In this manner, the plurality of end-user devices as a whole is populated with items explicitly requested the end-users. Other end-users requesting the same item can then be served from the local storage of the specific end-user instead of from the server of the content provider.

Note that this method scales with the number of end-users and distributes the required I/O bandwidth among the community of end-user devices. Also note that a specific end-user device need not store an item that the specific end-user device has not explicitly requested. As a result, only items of content information are being transferred via the access network to the community of end-user devices that at least one of the end-user devices has requested, thus enabling to spend precious bandwidth and storage I/O on items actually being consumed. Also note that two or more end-user devices may store the same item of content information. Also note that the approach according to the invention is highly suitable for the distribution of items of content information that are of local interest to the community of end-users of the data processing devices connected to the same node in the access network. Items of local interest are, for example, electronic newspapers covering local events, video items of local events or about the geographic region, etc. If such an item is currently of interest to a specific end-user, it is likely to be currently of interest to other end-users of the same community. The item is then downloaded from a server, via the Internet and the access network, to the first requesting data processing device where it is held in storage. A next request for the same item and issued by a second data processing device can then be served by the first data processing device. A second next request can then be served by the first data processing device or the second data processing device, or both.

More specifically, the invention relates to a method of controlling delivery of an item of electronic content information from a source on data network via an access network to a plurality of data processing devices. Each respective one of the plurality of data processing devices comprises a respective local storage. The access network comprises a registry. The method comprises monitoring in the access network a request issued by a specific one of the plurality of data processing devices to the source for delivery of the item; and consulting the registry for determining whether the item is available from local storage at another one of the plurality of data processing devices. If the item is available from the local storage at the other data processing device according to the registry, the method comprises redirecting the request to the other data processing device, and registering in the registry an availability of the item from the local storage of the specific data processing device when the other data processing device has supplied the requested item to the specific data processing device in response to the redirected request. If the item is not available from local storage at any of the plurality of data processing devices according to the registry, the method comprises forwarding the request to the source; monitoring in the access network a response from the source to the request; and registering in the registry an availability of the item from the local storage of the specific data processing device when the source has delivered the item to the specific data processing device in response to the request.

If, in an embodiment of the method, the other data processing device fails to supply to the specific data processing device the requested item in response to the redirected request, the method comprises updating the registry to indicate that the requested item is unavailable from the other data processing device; and consulting the registry for determining whether the item is available from local storage at a further other one of the plurality of data processing devices. An advantage of this embodiment is that none of the access network and the data processing devices needs to implement a caching strategy.

The invention can also be commercially exploited as a node in an access network, wherein the access network is operative to connect a plurality of data processing devices to a data network. Each respective one of the plurality of data processing devices comprises a respective local storage. The node comprises a registry. The node is configured for monitoring a request issued by a specific one of the plurality of data processing devices via the access network to a source on the data network for delivery of an item of electronic content information; and consulting the registry for determining whether the item is available from local storage at another one of the plurality of data processing devices. If the item is available from the local storage at the other data processing device according to the registry, the node redirects the request to the other data processing device, and registers in the registry an availability of the item from the local storage of the specific data processing device when the other data processing device has supplied the requested item to the specific data processing device in response to the redirected request. If the item is not available from local storage at any of the plurality of data processing devices according to the registry, the node forwards the request to the source and monitors in the access network a response from the source to the request. The node registers in the registry an availability of the item from the local storage of the specific data processing device when the source has delivered the item to the specific data processing device in response to the request.

The node may be implemented as a piece of hardware, e.g., a piece of electronic circuitry, as software running on a general-purpose computer, or as a combination thereof.

An embodiment of the node is configured for updating the registry to indicate that the requested item is unavailable from the other data processing device; and consulting the registry for determining whether the item is available from local storage at a further other one of the plurality of data processing devices, if the other data processing device fails to supply to the specific data processing device the requested item in response to the redirected request:

The invention can also be commercially exploited as control software on a computer-readable medium. The control software is configured for control operation of a node in an access network. The access network is operative to connect a plurality of data processing devices to a data network. Each respective one of the plurality of data processing devices comprises a respective local storage. The node comprises a registry. The control software comprises first instructions for monitoring a request issued by a specific one of the plurality of data processing devices via the access network to a source on the data network for delivery of an item of electronic content information; second instructions for consulting the registry for determining whether the item is available from local storage at another one of the plurality of data processing devices; third instructions for redirecting the request to the other data processing device, and registering in the registry an availability of the item from the local storage of the specific data processing device when the other data processing device has supplied the requested item to the specific data processing device in response to the redirected request, if the item is available from the local storage at the other data processing device according to the registry; and fourth instructions for, if the item is not available from local storage at any of the plurality of data processing devices according to the registry: forwarding the request to the source; monitoring in the access network a response from the source to the request; and registering in the registry an availability of the item from the local storage of the specific data processing device when the source has delivered the item to the specific data processing device in response to the request.

An embodiment of the control software comprises fifth instructions for, if the other data processing device fails to supply to the specific data processing device the requested item in response to the redirected request, updating the registry to indicate that the requested item is unavailable from the other data processing device; and consulting the registry for determining whether the item is available from local storage at a further other one of the plurality of data processing devices.

For completeness, reference is made to the following publications.

US patent application publication 20090199250 A discloses a method comprising intercepting a download request, originally directed to an original destination, for content; processing the download request; searching for the content in a local cache; servicing the download request from the local cache if the content is found in the local cache; forwarding the download request to the original destination if the content is not found in the local cache; and notifying a server of the intercepted download request, wherein the server transmits the content to one or more clients via one or more video channels. The local cache referred to in this publication is the cache of the requesting client, and the intercepting of the request occurs at the client. In the invention, on the other hand, the clients need not be modified as the access network, e.g., a particular node therein, maintains an overview and intercepts the requests.

US patent application publication 20100030871 relates to client-side caching. When a client receives a request for data that is located on a remote server, the client first checks a local cache to see if the data is stored in the local cache. If the data is not stored in the local cache, the client may check a peer cache to see if the data is stored in the peer cache. If the data is not stored in the peer cache, the client obtains the data from the remote server, caches it locally, and publishes to the peer cache that the client has a copy of the data. Note that this known way of managing caches requires clients configured for P2P communication. In the invention as described herein, a data processing device (i.e., a client) does not initiate itself the contacting of another data processing device to check availability. In the invention, the availability is centrally logged by centrally monitoring data traffic in the access network, e.g., at a DSLAM, a router or a proxy server, and a request from a data processing device is re-directed at the access network in order to access another data processing device registered as having available the requested data.

US patent application publication 2001027479 discloses a system and method for enabling data package distribution to be performed by a plurality of peer clients connected to each other through a network, such as a LAN (local area network). Each peer client can obtain data packages from each other or from an external server. However, each peer client preferably obtains data packages from other peer clients, rather than obtaining data packages from the external server. A control protocol is used to provide each client with knowledge about the locations of data packages across the local network. Note that in the invention, the data processing devices themselves do not maintain an inventory of the locations of data packets across the local network. In the invention, a DSLAM, a router or a proxy server in the access network, maintains an overview on the basis of monitoring data traffic and controls the redirecting of requests on the basis of the overview.

International application publication WO0029990 relates to a technique for optimizing delivery of specialized content files such as multimedia files in a computer network. A multimedia file cache is located at a point of presence, such as at an Internet Service Provider (ISP), gateway, or other place close to user connection points into the network. A redirection function intercepts media redirection file requests sent to or from the media server and rewrites such requests so that they point to the local media file cache. According to this publication, the caching is done at the ISP or at a gateway. Note that this known approach introduces the I/O-problem that the invention seeks to solve.

GB2412270 discloses method of distributing rights-managed media data items to users, wherein each media data item has associated rights information, including a time-limited availability attribute. The method comprises, for each media data item: In a seeding phase; storing the media data item; receiving requests for the media data item from a plurality of users; determining the availability of the requested media data item based on the associated rights information; transmitting the requested media data item to the plurality of users; and storing information identifying the media data item, the associated rights information for the media data item and a list of users who have received the media data item. In a peer-to-peer phase the method comprises receiving requests for the media data item from at least one further user; compiling a list of sources of the media data item in a peer-to-peer network based on the list of users who have received the media data item; determining the availability of the requested media data item based on the associated rights-information; transmitting the list of sources to the at least one further user to enable the user to obtain the requested media data item via the peer-to-peer network and storing information identifying the requested media data item, the at least one further user and the rights-information of the requested media data item.

### BRIEF DESCRIPTION OF THE DRAWING

The invention is explained in further detail, by way of example and with reference to the accompanying drawing, wherein:
Fig.1 is a block diagram of a system in the invention;
Fig.2 is a flow diagram of a process in the invention;
Figs.3 and 4 are process diagrams illustrating the interaction between the entities in the system of the invention; and
Fig.5 is a block diagram of an implementation of the system in the invention.

Throughout the Figures, similar or corresponding features are indicated by same reference numerals.

### DETAILED EMBODIMENTS

A source on a data network supplies an item of electronic content information via an access network to a plurality of data processing devices. Each data processing device has a local storage. A node on the access network comprises a registry. The node monitors a request issued by a specific data processing device to the source for delivery of the item. The node consults the registry for determining whether the item is available from another data processing device. If the item is available from the other data processing device, the node redirects the request to the other data processing device, and registers in the registry an availability of the item from the specific data processing device when the other data processing device has supplied the requested item. If the item is not available from any data processing device, the node forwards the request to the source, monitors a response from the source, and registers in the registry the availability of the item from the specific data processing device when the source has delivered the item.

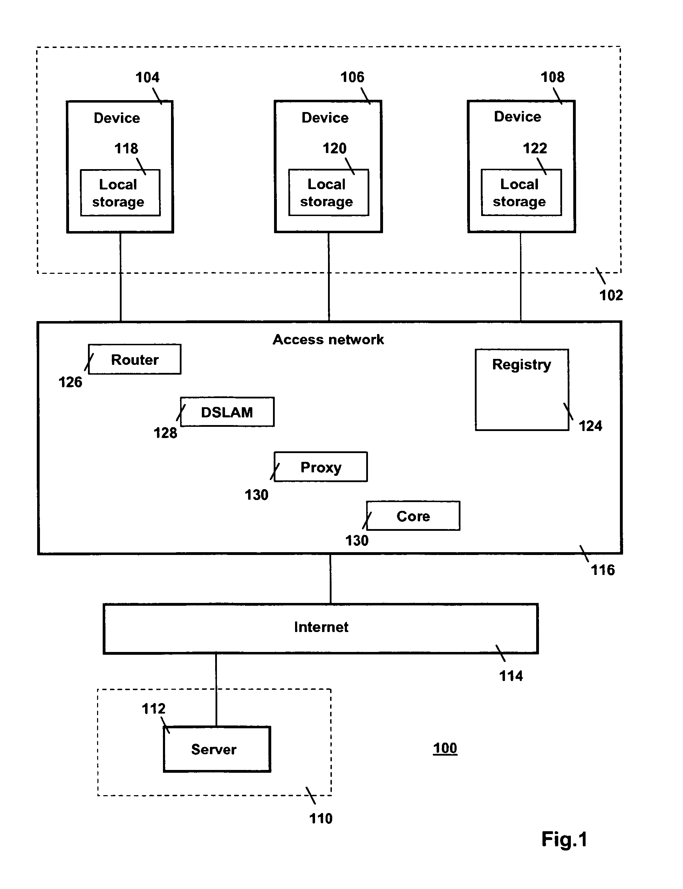

Fig.1 is a block diagram of a data processing system 100 in the invention. The data processing system 100 comprises a plurality of data processing devices 102. The block diagram of Fig.1 only shows a first data processing device 104 of a first end-user, a second data processing device 106 of a second end-user and a third data processing device 108 of a third end-user, in order to not obscure the drawing. The expression "data processing device" is used here to cover end-user equipment that has a network interface for data communication and play-out functionality for playing out electronic content information received via the network interface. The data communication functionality and the play-out functionality may be integrated within a single physical entity (e.g., a personal computer having a network interface and a media player, a mobile communication device having a broadband connection and a media player onboard) or, alternatively, may be distributed among different physical entities such as, e.g., a gateway and a media player that form respective parts of the end-user's home network.

The data processing system 100 further comprises one or more content servers 110, of which only a single one is illustrated as a content server 112. The data processing system 100 further comprises a data network 114, e.g., the Internet, and an access network 116. The access network 116 connects the plurality of data processing devices 102 to the Internet 112 for data communication with the content servers 110. Each respective one of the plurality of data processing devices 102 is configured for playing out items of electronic content information received from the content servers 110 via the Internet 114 and the access network 116.

Each respective one of the plurality of data processing devices 102 has a respective local storage, e.g., a hard-disk, re-writable optical disc, semiconductor memory, etc., for storing one or more items of content information received via the access network 116. The first data processing device 104 has a first local storage 118. The second data processing device 106 has a second local storage 120. The third data processing device 104 has a third local storage 122.

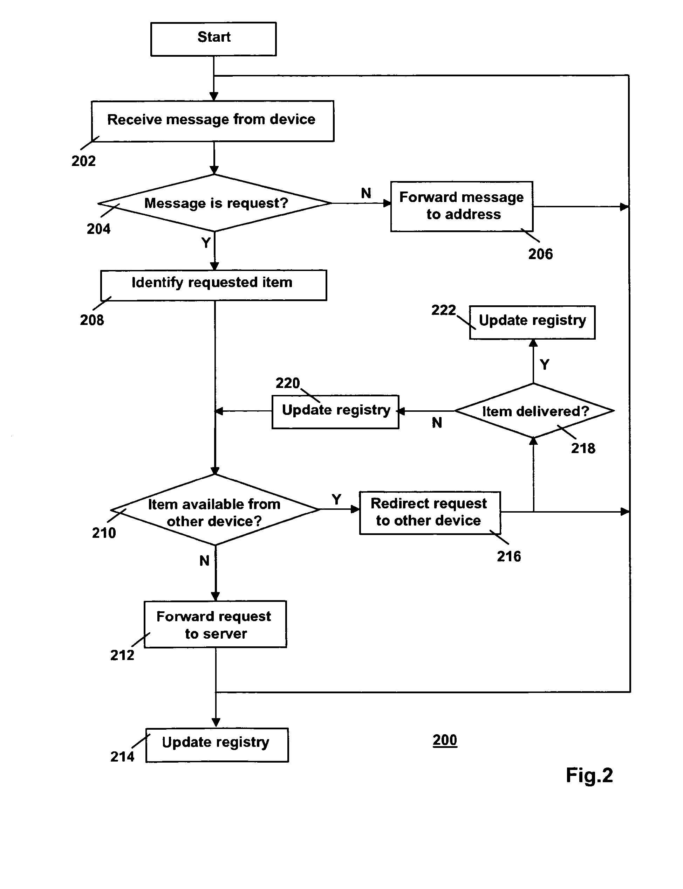

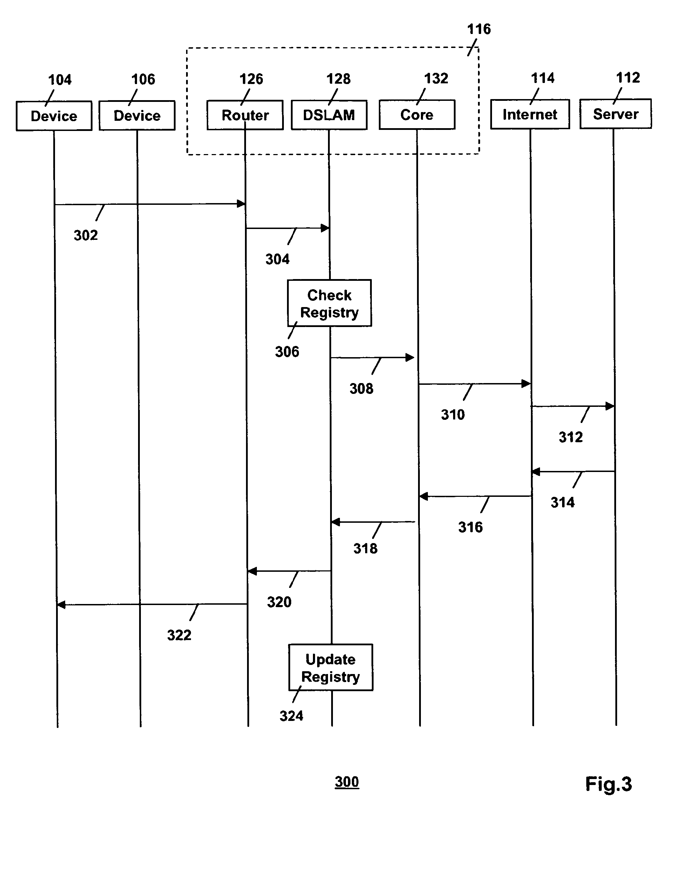

The access network 116 comprises a registry 124 that is operative to keep track of what items of content information have been provided via the access network 116 to which ones of the plurality of data processing devices 102. The access network 116 is illustrated here as comprising, e.g., a router 126, a DSLAM 128, a proxy server 130 and a core network 132. Operation of the data processing system 100 is explained with reference to Figs.2 and 3.

Fig.2 is a flow diagram of a process 200 illustrating operation of the data processing system 100. Assume that the first data processing device 104 sends a request to the content server 112 for a specific item of pre-recorded content information, e.g., a movie, a video of a pre-recorded event, or a series of video clips, a piece of music or a series of audio clips, etc. The request is sent from the first data processing device 104 to a node in the access network 116, e.g., the router 126, the DSLAM 128, or the proxy server 130. The node is configured to perform the steps as shown in the flow diagram 200.

In a first step 202 of the process 200, the node receives a message from the first data processing device 104.

In a second step 204, the node determines whether or not the message is a request for an item of content information.

If it is determined in the second step 204 that the message is not a request for an item of content information, the process proceeds with a third step 206. In the third step 206, the message is forwarded to the destination address on the Internet 114 as indicated in the message. For example, if the message is actually a request for an item of content information but the monitoring node cannot interpret the message as a request for an item of content information, the message is forwarded to the destination address indicated in the message as received by the node. After the third step 206, the process 200 returns to the first step 202.

If it is determined in the second step 204 that the message is a request for an item of content information, the process proceeds with a fourth step 208. In the fourth step 208, the node determines an identifier of the requested item. The item requested can be identified in a variety of manners, examples of which will be discussed further below. If the item requested has been identified in the fourth step 208, the process proceeds with a fifth step 210.

In the fifth step 210, the node consults the registry 124 for determining whether or not the item, requested by the first data processing device 104 as identified in the fourth step 208, is available from the local storage of one or more other ones of the plurality of data processing devices 102.

If, in the fifth step 210, it is determined from the registry 124 that the item is not available from any other one of the data processing devices 102, the process 200 proceeds with a sixth step 212.

In the sixth step 212, the node forwards the request to the destination address, here the network address of the content server 112. After the sixth step 212, the process flow divides into a first branch and a second branch. The process 200 proceeds along the first branch to return to the first step 202 for processing a next message received from any of the plurality of data processing devices 102. In the meantime, the process 200 continues along the second branch that includes an seventh step 214.

In the seventh step 214, as soon as the node has determined that the item has been delivered to the first data processing device 104, the node updates the registry 124 with the information that the item, identified in the fourth step 208, is available from the first local storage 118 of the first data processing device 104. Accordingly, the seventh step 214 can be carried out independently of processing a next message from the plurality of data processing devices 102 starting with the first step 202.

Determining whether or not the content server 112 has delivered the requested item to the first data processing device 104, can be implemented in a variety of manners. For example, the node monitors the response from the content server 112 to the request that was forwarded to the content server 112 in the seventh step 214. If the node interprets the response from the content server 112 as a delivery of the requested item from the content server 112 to the first data processing device 104, the registry 124 can be updated to indicate that the item will be available from the first local storage 118 of the first data processing device 104. Alternatively, the first data processing system 104 sends an acknowledgement to the node via the access network 116 upon receipt of the item from the content server 112 via the access network 116 in response to the request.

If it is determined in the fifth step 210 that the item, requested by the first data processing device 104, is available from the local storage of one or more other ones of the plurality of data processing devices 102, e.g., from the second local storage 120 of the second data processing device 106, the process 200 proceeds with an eighth step 216.

In the eighth step 216, the node redirects the request from the first data processing device 104 to the second data processing device 106. After the tenth step 220, the process flow divides into a third branch and a fourth branch.

The process 200 proceeds along the third branch to return to the first step 202 for processing a next message received from any of the plurality of data processing devices 102.

In the meantime, the process 200 also continues along the fourth branch to a ninth step 218, wherein it is determined whether or not the other data processing device, here, the second data processing device 106, has actually delivered the requested item to the first data processing device 104 in response to the re-directed request. This could be implemented in a variety of ways. For example, the second data processing device 106 is configured to send an acknowledgement to the node via the access network 116 when transferring the item to the first data processing device via the access network 116 in response to the redirected request. Alternatively, the first data processing device 104 is configured for sending an acknowledgement to the node via the access network 116 upon receipt of the requested item. Alternatively, the node monitors on the access network 116 the response of the second data processing device 106 to the re-directed request from the first data communication device 104. If the second data processing device 106 does not respond or returns an error message, it may be assumed that the item is not available from the second data processing device 106.

If it is determined in the ninth step 218 that the second data processing device 106 has not delivered the item in response to the request, the process 200 proceeds with a tenth step 220 wherein the registry 124 is updated by removing the entry for the second data processing device 106 as available for delivery of the item. After the tenth step 220, the process 200 returns then to the fifth step 210 to consult the registry 124 and check if another one of the data processing devices 102, e.g., the third data processing device 108, has the item available.

If it is determined in the ninth step 218 that the second data processing device 106 has indeed delivered the item to the first data processing device 104 in response to the request, the process 200 continues with an eleventh step 222.

In the eleventh step 222, the node updates the registry 124 with the information that the requested item will be available from the first local storage 118 of the first data processing device 104. Accordingly, the eleventh step 222 can be carried out independently of processing a next message from the plurality of data processing devices 102 starting with the first step 202. As soon as the node has determined that the item has been delivered to the first data processing device 104 the registry 124 is updated. The registry 124 now indicates that the item is available from the second local storage 120 of the second data processing device 106 as well as from the first local storage 118 of the first data processing device 104.

As to identifying an item in the fourth step 208, many ways exist for doing that. For example, the item requested is selected from a list or menu of items of content information. The list or menu is prepared in advance and distributed among, or made otherwise accessible to, the plurality of the data processing devices 102. An example of such a list or menu is an inventory of items made available by a VoD service or by Youtube. The items are presented in a user-interactive list or menu via a user-interface (not shown) of the first data processing device 104. The end-user selects a specific item from the user-interactive list or menu via the user-interface and thereby causes the data processing device 104 to send a request to a network address of the VoD service on the Internet 114. The network address itself may be the unique identifier of the requested item. Alternatively, the selected item has associated with it a unique identifier that is included in the pay-load of the request as sent by the first data processing system 104 to the network address of the VoD service or to Youtube.

If demand for a particular item increases within the population of the plurality of data processing devices 102, an increasing number of data processing devices of the population will be storing a copy of the item in their respective local storages as a result of the end-users of the data processing devices storing the item having requested the item.

The local storage of the data processing devices serves as a geographically distributed cache. As storage capacity is limited, stored copies of the item will need to be removed from the local storage so as to open up storage capacity for new items. Removal of the item from local storage is implemented by means of, e.g., explicitly deleting the item under control of the end-user or under control of a caching strategy controlled by the node in the access network 116, or by overwriting the item with a new item. When an item has thus been removed from the local storage of a specific one of the plurality of data processing devices 102, the registry 124 needs to be updated.

Updating the registry 124 upon removal of an item stored in local storage of a specific one of the plurality of data processing devices 102 can be implemented in a variety of manners.

For example, the specific data processing device is configured to notify the node via the access network 116 of the removal of the item when it is expressly deleted from the local storage or when it has been overwritten. Alternatively, if a specific one of the data processing devices 102 is listed in the registry as having available a requested item and does not, or not adequately respond to a request, redirected in the eighth step 216, the specific data processing device is taken off the list in the tenth step 220. According to this latter approach, the data processing system 100 automatically restores integrity of the information at the registry 124.

Fig.3 is a first process diagram 300 that illustrates the interaction between the entities in the system 100 of the invention in case none of the plurality of data processing devices 102 has available the item of electronic content information requested by the first data processing device 104. It is assumed here that, by way of example, the DSLAM 128 maintains the registry 124.

In a first action 302, the first data processing device 104 sends a request for the item. The request is addressed to the server 112 on the Internet 114. The request is sent from the first data processing device 104 to the access network 116. The router 126 at the access network receives the request.

In a second action 304, the router 126 forwards the request to the DSLAM 128. The DSLAM 128 receives the request.

In a third action 306, the DSLAM 128 checks the registry 124 to determine if the item requested is available from another one of the plurality of data processing devices 102. In this case, the registry 124 does not list any of the plurality of data processing devices 102 that have available the requested item.

In a fourth action 308, the DSLAM 128 forwards the request to the core network 132.

In a fifth action 310, the core network 132 forwards the request to the Internet 114, addressing the server 112.

In a sixth action 312, the Internet forwards the request to the server 112.

In a seventh action 314, the server responds by sending the requested item to the Internet 114, directly or indirectly addressing the first data processing device 104. As to directly addressing: the address of the first data processing device 104 on the access network 116 is used at the server 112 to specify the destination of the response of the server 112. As to indirectly addressing: the access network 116 may want hide the identity of the first data processing device 104 from the server 112 and from the Internet 114 as a whole, or the access network 116 uses routing protocols and addressing protocols that are incompatible with those used on the Internet 114. The access network 116 may then use network address translation, and temporarily assign a unique identifier to the forwarded request, replacing the network address of the first data processing device 104. In this case the server 112 may then use this temporarily assigned unique identifier in the response to the access network 116. The actual destination is then resolved at the access network 116 under control of the unique identifier.

In an eighth action 316, the Internet 114 forwards the response to the core network 132.

In a ninth action 318, the core network 132 forwards the response to the DSLAM 128.

In a tenth action 320, the DSLAM 128 forwards the response to the router 126.

In an eleventh action 322, the router 126 forwards the response to the first data processing device 104.

The response from the server 112 to the request from the first data processing device 104, i.e., the requested item, thus passes the core network 116. The core network 116 updates the registry 124 in a twelfth action 324 to list the first data processing device 104 as having available the item as requested. The twelfth action 324 does not interfere with, or otherwise affect, the previous actions 302-322. The updating could be carried out, e.g., when the item is identified while passing the core network 116 before the item is being forwarded, or during the forwarding, to the first data processing device 104. Alternatively, the updating could be carried out after the item has been forwarded to the first data processing device 104. The updating of the registry 124 renders the item available to one or more other ones of the plurality of data processing devices 102, when the one or more other data processing devices submit a request for this item to the server 112 and the request is intercept at the DSLAM 128.

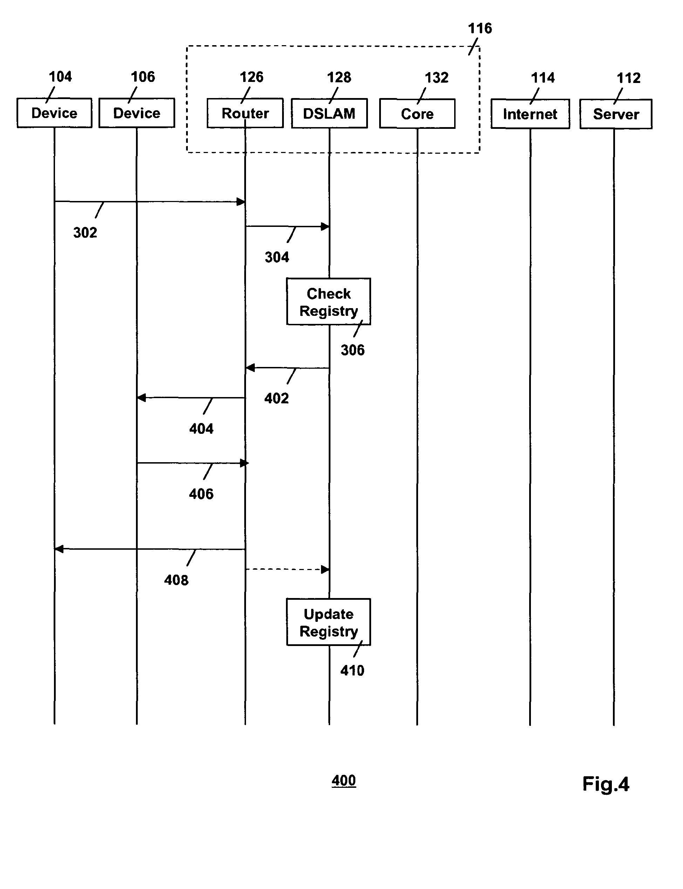

Fig.4 is a second process diagram 400 that illustrates the interaction between the entities in the system 100 of the invention in case the second data processing devices 106 has available the item of electronic content information requested by the first data processing device 104.

The first action 302, the second action 304 and the third action 306 in the second process diagram 400 are similar to the first action 302, the second action 304 and the third action 306 in the first process diagram 300.

In the third action 306, the DSLAM 128 checks the registry 124 to determine if the item requested is available from another one of the plurality of data processing devices 102. In this case, the registry 124 lists the second data processing device 106 as having the requested item available.

In a thirteenth action 402, the DSLAM 128 redirects the request from the first data processing device 104 to the second data processing device 106, and forwards the redirected request to the router 126.

In a fourteenth action 404, the router 126 forwards the redirected request to the second data processing device 106. The redirected request includes the address of the first data processing device 104.

In a fifteenth action 406, the second data processing device 106 responds to the request and sends the requested item to the router 126.

In a sixteenth action 408, the router 126 forwards the item to the first data processing device 104.

The response from the second data processing device 106 to the request from the first data processing device 104, i.e., the requested item, thus passes the access network 116. The access network 116 updates the registry 124 in a twelfth action 324 to also list the first data processing device 104 as having available the item requested. The twelfth action 324 does not interfere with, or otherwise affect, the previous actions 302-306, 402-408. The updating could be carried out, e.g., when the item is identified while passing the access network 116 before the item is being forwarded, or during the forwarding, to the first data processing device 104. Alternatively, the updating could be carried out after the item has been forwarded to the first data processing device 104. The router 126 therefore notifies the DSLAM 128 or the core network 132 in a seventeenth action 410 that the registry 124 can be updated by listing the first data processing device 104 as having the item available. Alternatively, the router 126 submits to the registry 124 a request to update the registry 124 with the information that the first data processing device 104 has the item available. The updating of the registry 124 renders the item available to one or more other ones of the plurality of data processing devices 102, when the one or more other data processing devices submit a request for this item to the server 112 and the request is intercepted at the DSLAM 128.

As already mentioned earlier, in order for the system 100 to work, the item of content information requested by one or more specific ones of the plurality of data processing devices 102 needs to be uniquely identifiable, at least within the community of the plurality of data processing devices 102. For example, the request for the item comprises the URL of the item at the server 112 or the request comprises a unique identifier that enables to uniquely identify the item. An example of such as unique identifier is a Content Resource Identifier (CRID). A CRID is a globally unique identifier of a piece of electronic content information as specified in the standards of the TV-Anytime forum. Alternatively, each different one of the content providing servers on the Internet can use its own labeling system to identify an item of electronic content information within their own inventory of electronic content information. The combination of the URL of the server and the proprietary identifier enables to identify the item at the access network 116.

A specific one of the data processing devices 102, which is participating in serving as a cache for one or more items of electronic content information in the system 100, needs to have the hardware to supply an item upon receiving a redirected request for the item from another one of the data processing devices 102. For example, the participating data processing device comprises a web server or an RTSP streaming server.

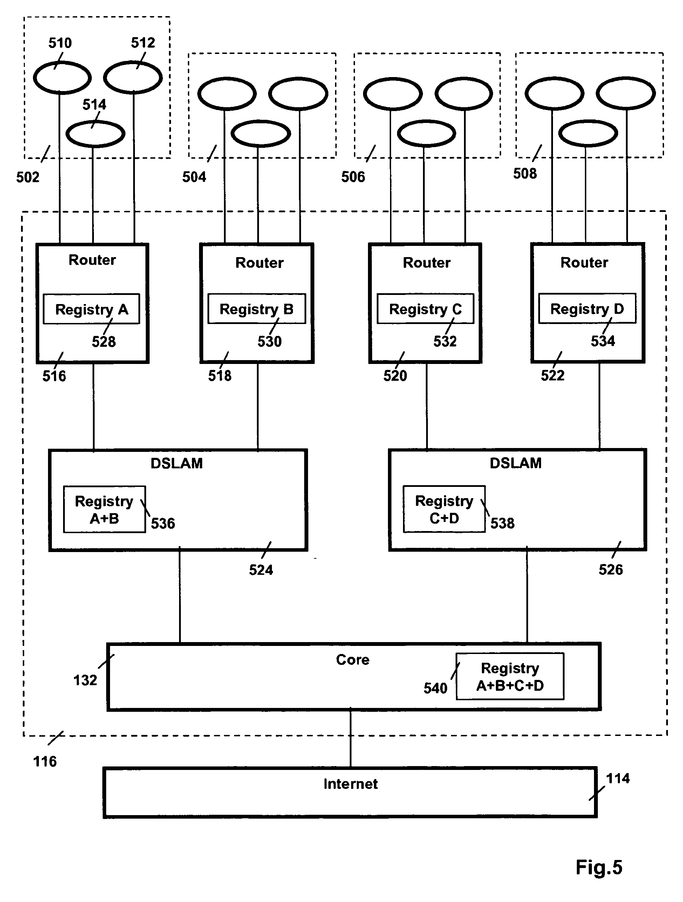

Note that the access network 116 generally comprises one or more routers connected to a single DSLAM, or a plurality of DSLAMS connected to a single proxy server on the core network 132 of the access network 116, etc. This hierarchical configuration of the access network 116 can be carried over to the registry. This is explained with reference to Fig.5.

Fig.5 is a diagram that shows a portion of an implementation 500 of the system 100 discussed above. The access network 116 in the implementation 500 serves to connect multiple clusters of data processing devices to the Internet 114, for example a first cluster 502, a second cluster 504, a third cluster 506 and a fourth cluster 508. In order to not obscure the drawing, only some of the data processing devices of the first cluster 502 have been indicated with reference numerals. The first cluster comprises a fourth data processing device 510, a fifth data processing device 512 and a sixth data processing device 514. The fourth data processing device 510, the fifth data processing device 512 and the sixth data processing device 514 are similar to, e.g., the first data processing device 104, the second data processing device 106 and the third data processing device 108, respectively, as discussed with reference to Fig. 1.

The access network 116 comprises a first router 516, a second router 518, a third router 520 and a fourth router 522. The first cluster 502 is connected to the first router 516. The second cluster 504 is connected to the second router 518. The third cluster 506 is connected to the third router 520. The fourth cluster 508 is connected to the fourth router 522.

The access network 116 comprises a first DSLAM 524 and a second DSLAM 526. The first DSLAM 524 connects the first router 516 and the second router 518 to the core network 132. The second DSLAM 526 connects the third router 520 and the fourth router 522 to the core network 132.

The implementation 500 can be considered a data network formed by interconnecting multiple subsidiary data networks. Generally, the subsidiary data networks use the Internet protocol stack, e.g., TCP (Transmission Control Protocol) at the transport layer, IP (Internet Protocol) at the Internet layer, HTTP (Hypertext Transfer Protocol) and RSTP (Real Time Streaming Protocol) at the application layer, etc. The subsidiary data networks may differ from one another in the communication protocols used at the lower data link layer. For example, one subsidiary data network uses Ethernet at the data link layer, another subsidiary data network uses VDSL (Very-High Bitrate Digital Subscriber Line) technology at the data link layer, and a third subsidiary data network uses ATM (Asynchronous Mode Transfer) technology at the data link layer, etc. Different ones of these subsidiary data networks may then be interconnected by means of routers or gateways, dependent on the types of the subsidiary data networks.

The first router 516 maintains a first registry 528 of items that have been delivered via the first router 516 to the data processing devices of the first cluster 502. Each respective one of the data processing devices of the first cluster 502 stores a respective number of these items (none, one, two, ...) at their local storage and makes these items available upon receiving a request to do so. Similarly, the second router 518 maintains a second registry 530 of items that have been delivered via the second router 518 to the data processing devices of the second cluster 502; the third router 520 maintains a third registry 532 of items that have been delivered via the third router 520 to the data processing devices of the third cluster 506; and the fourth router 522 maintains a fourth registry 534 of items that have been delivered via the fourth router 522 to the data processing devices of the fourth cluster 502.

Consider a specific one of the data processing devices of the first cluster 502 submitting a request to the server 112 for the download or streaming of a particular item of content information. If the first registry 528 lists this item as being available from another one of the data processing devices of the first cluster 502, the first router 516 redirects the request to this other data processing device of the first cluster 502. If the first registry 528 does not list the requested item as available within the first cluster 502, the first router 516 forwards the request to the server 112 via the first DSLAM 524. This scenario has been discussed above with reference to Figs. 1-4.

The first DSLAM 524 is connected to the first router 516 and the second router 518. The first DSLAM 524 maintains a fifth registry 536 of items that have been delivered via the first DSLAM 524 to the first cluster 502 and to the second cluster 504. The second DSLAM 526 is connected to the third router 520 and the fourth router 522. The second DSLAM 526 maintains a sixth registry 538 of items that have been delivered via the second DSLAM 526 to the data processing devices of the third cluster 506 and to the fourth cluster 508.

In above scenario, the first DSLAM 524 receives the request for the particular item as forwarded by the first router 516. If the first DSLAM 528 receives a request forwarded by the first router 516, the conclusion can be drawn that the item requested is not available from the data processing devices of the first cluster 502. Similarly, if the first DSLAM 528 receives a request forwarded by the second router 518, the conclusion can be drawn that the item requested is not available from the data processing devices of the second cluster 502.

Accordingly, upon receipt of the request, originating in the first cluster 502 and forwarded by the first router 516, the first DSLAM 524 consults the part of the fifth registry 536 that relates to the items listed as being available from the second cluster 504. If the fifth registry 536 lists the particular item as available from a specific data processing device in the second cluster 504, the first DSLAM 524 redirects the request to that specific data processing device in the second cluster 504. If the first registry 536 does not list the requested item as available from any of the data processing devices of the second cluster 504, the first DSLAM 524 forwards the request to the core network 132.

Likewise, if the first DSLAM 524 receives a request, originating from a data processing device in the second cluster 504 and forwarded by the second router 518, the first DSLAM 524 consults the part of the fifth registry 536 that relates to the items listed as being available from the first cluster 502. If the fifth registry 536 lists the requested item as available from a specific data processing device in the first cluster 502, the first DSLAM 524 redirects the request from the requesting data processing device in the second cluster 504 to that specific data processing device in the first cluster 502. If the first registry 536 does not list the requested item as available from any of the data processing devices of the first cluster 502, the first DSLAM 524 forwards the request to the core network 132.

The core network 132 maintains a seventh registry 540 of items that have been delivered via the core network 132 to any of the data processing devices of the first cluster 502, the second cluster 504, the third cluster 506 and the fourth cluster 508.

If the core network 132 receives a request forwarded by the first DSLAM 524, the conclusion can be drawn that the item requested is not available from any of the data processing devices in the first cluster 502 and the second cluster 504 combined. Accordingly, upon receipt of the request, originating in the first cluster 502 and forwarded by the first router 516 and by the first DSLAM 524, the core network 132 consults that part of the seventh registry 540 that pertains to the items delivered from the Internet 114 via the core network 132 to the data processing devices of the third cluster 506 and the fourth cluster 508 combined.

If the consulted part of the seventh registry 540 indicates that the requested item is available from a specific data processing device in, e.g., the fourth cluster 508, the core network 132 redirects this request to that specific data processing device in the fourth cluster 508. If the consulted part of the seventh registry 540 indicates that the requested item is not available from any of the data processing devices of the third cluster 506 and the fourth cluster 508 combined, the core network 132 forwards the request to the server 112.

Similarly, if the core network 132 receives a request forwarded by the second DSLAM 518, the conclusion can be drawn that the item requested is not available from the data processing devices of the third cluster 506 and the fourth cluster 508. Then, the core network 132 consults that part of the seventh registry 540 that relates to the items delivered via the core network to the data processing devices of the first cluster 502 and the second cluster 504 combined. If the consulted part indicates that a specific data processing device in, e.g., the second cluster 504, has the requested item available, the core network redirects the request to that specific data processing device in the second cluster 504. If the consulted part of the seventh registry 540 indicates that the requested item is not available from any of the data processing devices of the first cluster 502 and the second cluster 504 combined, the core network 132 forwards the request to the server 112.

The access network 116 in the implementation 500 of the system 100 has a hierarchical configuration. One level in the hierarchy comprises multiple routers, and each respective one of the routers connects a respective one of multiple clusters of data processing devices to a single DSLAM. Another level in the hierarchy comprises multiple DSLAMS, and each respective DSLAM connects two or more respective ones of the routers to the core network 132. The hierarchy can be expanded at the core network 132 by considering one or more layers of proxy servers of the core network 132.

The implementation 500 of the system 100 uses the hierarchical configuration of the access network 116 to call into being a hierarchical decision structure to determine whether or not to redirect a request from one data processing device to another data processing device connected to the same access network 116.

The decision structure has a first level at which the decision is made at the level of the routers after checking the relevant registry of the relevant router maintained for items that have been delivered via the relevant router. The decision structure at the router level enables to redirect a request from a data processing device in one cluster to another data processing device in another cluster.

The decision structure has a second level at which the decision is made at the level of the DSLAMs after checking the relevant registry of the relevant DSLAM maintained for items that have been delivered via the relevant DSLAM. The decision structure at the DSLAM level enables to redirect a request from a data processing device in one cluster connected to one router to another data processing device in another cluster connected to another router.

The decision structure has a third level at which the decision is made at the level of the core network after checking the relevant registry of the core network maintained for items that have been delivered via the core network. The decision structure at the core network level enables to redirect a request from a data processing device in one cluster served via one DSLAM to another data processing device in another cluster served by another DSLAM.

Typically, a conventional access network does not include a proxy server. According to the invention, the access network 116 may comprise a proxy server 130 to manage the redirecting of the request from the data processing device initiating the request to another data processing device that is registered as having the requested item available, or to forward the request to a node in the access network 116 that has an overview of the registries at the next higher level. For example, the first router 516 only has an overview of the first registry 528; the first DSLAM 524 has an overview of the first registry 528 and the second registry 530; the core network has an overview of the first registry 528, the second registry 530, the third registry 532 and the fourth registry 534. One or more proxy servers could be added at intermediate nodes of the access network 116. The proxy server is then operative to redirect the request, received from a node at a lower layer, to another node at the same lower layer or to another node at a still more lower layer, if the registry at the proxy indicates that the item requested is available from a data processing device connected to the proxy server via the other node. The proxy server is operative to forward the request, received from a node at a lower layer, to another node at a higher layer if the registry at the proxy indicates that the item requested is not available from any data processing device connected to the proxy server via further nodes at the lower layer.

The implementation 500 of the system 100 is shown in the diagram of Fig.5 with each individual one of the first DSLAM 524, the second DSLAM 526 and the core network 132 maintaining its separate registry. The fifth registry 536 of the first DSLAM 524 contains the information that is also contained in the first registry 528 of the first router 516 and the second registry 530 of the second router 518, combined. The sixth registry 538 of the second DSLAM 526 contains the information that is also contained in the third registry 532 of the third router 520 and the fourth registry 534 of the fourth router 518, combined. The seventh registry 540 in the core network 132 contains the information that is contained in the fifth registry 536 of the first DSLAM 524 and the sixth registry 538 of the second DSLAM 526.

As an alternative, one could choose to maintain the first registry 528 at the first router 516, the second registry 530 at the second router 518, the third registry 532 at the third router 520 and the fourth registry 534 at the fourth router 522, and to dispense with the fifth registry 536 at the first DSLAM 524, the sixth registry 538 at the second DSLAM 526, and the seventh registry 540 in the core network 132. Now, consider a specific one of the first DSLAM 524 and the second DSLAM 526 receiving a request, forwarded by a specific one of the routers connected to the specific DSLAM. The specific DSLAM now needs to consult the registry of the other router connected to the specific DSLAM in order to determine if the clusters connected to the other router have the requested item available. Accordingly, the specific DSLAM then needs to communicate with the other router in order to resolve this issue by accessing this other router's registry. Similarly, consider that the core network 132 receives a request forwarded by a specific one of the first DSLAM 524 and the second DSLAM 526. The core network 132 now needs to communicate with the registries residing at the routers connected to the other one of the first DSLAM 524 and the second DSLAM 526.

## Claims

1. A method (200) of controlling delivery of an item of electronic content information from a source (112) on data network (114) via an access network (116) to a plurality of data processing devices (102) connected to the access network, wherein:
each respective one (104, 106, 108) of the plurality of data processing devices comprises a respective local storage (118, 120, 122) **characterized in that**
the access network comprises a registry (124);
the method comprises:
monitoring (202) in the access network a request issued by a specific one of the plurality of data processing devices to the source for delivery of the item;
consulting (210) the registry for determining whether the item is available from local storage at another one of the plurality of data processing devices connected to the same access network;
if the item is available from the local storage at the other data processing device according to the registry, redirecting (216) the request to the other data processing device, and registering (222) in the registry an availability of the item from the local storage of the specific data processing device when the other data processing device has supplied (218) the requested item to the specific data processing device in response to the redirected request; and
if the item is not available from local storage at any of the plurality of data processing devices according to the registry:
forwarding (212) the request to the source;
monitoring in the access network a response from the source to the request; and
registering (214) in the registry an availability of the item from the local storage of the specific data processing device when the source has delivered the item to the specific data processing device in response to the request.

2. The method of claim 1, comprising:
if the other data processing device fails to supply to the specific data processing device the requested item in response to the redirected request:
updating (220) the registry to indicate that the requested item is unavailable from the other data processing device; and
consulting (210) the registry for determining whether the item is available from local storage at a further other one of the plurality of data processing devices.

3. A node in an access network, wherein:
the access network is operative to connect a plurality of data processing devices (102) to a data network (114)
each respective one (104, 106, 108) of the plurality of data processing devices comprises a respective local storage (118, 120, 122);
the node comprises a registry (124);
the node is configured for:
monitoring (202) a request issued by a specific one of the plurality of data processing devices via the access network to a source on the data network for delivery of an item of electronic content information;
consulting (210) the registry for determining whether the item is available from local storage at another one of the plurality of data processing devices;
if the item is available from the local storage at the other data processing device according to the registry, redirecting (216) the request to the other data processing device, and registering (222) in the registry an availability of the item from the local storage of the specific data processing device when the other data processing device has supplied (218) the requested item to the specific data processing device in response to the redirected request; and
if the item is not available from local storage at any of the plurality of data processing devices according to the registry:
forwarding (212) the request to the source;
monitoring in the access network a response from the source to the request; and
registering (214) in the registry an availability of the item from the local storage of the specific data processing device when the source has delivered the item to the specific data processing device in response to the request.

4. The node of claim 3, configured for:
if the other data processing device fails to supply to the specific data processing device the requested item in response to the redirected request:
updating (220) the registry to indicate that the requested item is unavailable from the other data processing device; and
consulting (210) the registry for determining whether the item is available from local storage at a further other one of the plurality of data processing devices.

5. Control software on a computer-readable medium, wherein:
the control software is configured for control operation of a node in an access network;
the access network is operative to connect a plurality of data processing devices (102) to a data network (114);
each respective one (104, 106, 108) of the plurality of data processing devices comprises a respective local storage (118, 120, 122);
the node comprises a registry (124);
the control software comprises:
first instructions for monitoring (202) a request issued by a specific one of the plurality of data processing devices via the access network to a source on the data network for delivery of an item of electronic content information;
second instructions for consulting (210) the registry for determining whether the item is available from local storage at another one of the plurality of data processing devices;
third instructions for redirecting (216) the request to the other data processing device, and registering (222) in the registry an availability of the item from the local storage of the specific data processing device when the other data processing device has supplied (218) the requested item to the specific data processing device in response to the redirected request, if the item is available from the local storage at the other data processing device according to the registry; and
fourth instructions for, if the item is not available from local storage at any of the plurality of data processing devices according to the registry:
forwarding (212) the request to the source;
monitoring in the access network a response from the source to the request; and
registering (214) in the registry an availability of the item from the local storage of the specific data processing device when the source has delivered the item to the specific data processing device in response to the request.

6. The control software of claim 6, comprising fifth instructions for, if the other data processing device fails to supply to the specific data processing device the requested item in response to the redirected request, updating (220) the registry to indicate that the requested item is unavailable from the other data processing device; and consulting (210) the registry for determining whether the item is available from local storage at a further other one of the plurality of data processing devices.

## Patentansprüche

1. Verfahren (200) zum Steuern der Ablieferung eines Postens elektronischer Inhaltsinformationen von einer Quelle (112) in einem Datennetzwerk (114) über ein Zugangsnetzwerk (116) an mehrere mit dem Zugangsnetzwerk verbundene Datenverarbeitungseinrichtungen (102), wobei
jede jeweilige (104, 106, 108) der mehreren Datenverarbeitungseinrichtungen einen jeweiligen lokalen Speicher (118, 120, 122) umfasst, **dadurch gekennzeichnet, dass**
das Zugangsnetzwerk eine Registrierdatenbank (124) umfasst; und
das Verfahren Folgendes umfasst:
Überwachen (202) einer durch eine spezifische der mehreren Datenverarbeitungseinrichtungen an die Quelle für die Ablieferung des Postens ausgegebenen Anforderung in dem Zugangsnetzwerk;
Konsultieren (210) der Registrierdatenbank, um zu bestimmen, ob der Posten von lokalem Speicher in einer anderen der mehreren Datenverarbeitungseinrichtungen, die mit demselben Zugangsnetzwerk verbunden ist, verfügbar ist;
wenn gemäß der Registrierdatenbank der Posten von dem lokalen Speicher in der anderen Datenverarbeitungseinrichtung verfügbar ist, Umlenken (216) der Anforderung zu der anderen Datenverarbeitungseinrichtung und Registrieren (222) einer Verfügbarkeit des Postens von dem lokalen Speicher der spezifischen Datenverarbeitungseinrichtung in der Registrierdatenbank, wenn die andere Datenverarbeitungseinrichtung den angeforderten Posten als Reaktion auf die umgelenkte Anforderung an die spezifische Datenverarbeitungseinrichtung geliefert hat (218); und
wenn der Posten gemäß der Registrierdatenbank nicht von lokalem Speicher irgendeiner der mehreren Datenverarbeitungseinrichtungen verfügbar ist:
Weiterleiten (212) der Anforderung zu der Quelle; Überwachen einer Antwort von der Quelle auf die Anforderung in dem Zugangsnetzwerk; und
Registrieren (214) einer Verfügbarkeit des Postens von dem lokalen Speicher der spezifischen Datenverarbeitungseinrichtung in der Registrierdatenbank, wenn die Quelle als Reaktion auf die Anforderung den Posten an die spezifische Datenverarbeitungseinrichtung abgeliefert hat.

2. Verfahren nach Anspruch 1, umfassend:
wenn die andere Datenverarbeitungseinrichtung den angeforderten Posten nicht als Reaktion auf die umgeleitete Anforderung an die spezifische Datenverarbeitungseinrichtung liefert:
Aktualisieren (220) der Registrierdatenbank, um anzuzeigen, dass der angeforderte Posten nicht von der anderen Datenverarbeitungseinrichtung verfügbar ist; und
Konsultieren (210) der Registrierdatenbank, um zu bestimmen, ob der Posten vom lokalen Speicher in einer weiteren der mehreren Datenverarbeitungseinrichtungen verfügbar ist.

3. Knoten in einem Zugangsnetzwerk, wobei
das Zugangsnetzwerk wirksam ist, um mehrere Datenverarbeitungseinrichtungen (102) mit einem Datennetzwerk (114) zu verbinden,
jede jeweilige (104, 106, 108) der mehreren Datenverarbeitungseinrichtungen einen jeweiligen lokalen Speicher (118, 120, 122) umfasst;
der Knoten eine Registrierdatenbank (124) umfasst; und der Knoten für Folgendes ausgelegt ist:
Überwachen (202) einer durch eine spezifische der mehreren Datenverarbeitungseinrichtungen über das Zugangsnetzwerk an eine Quelle in dem Datennetzwerk ausgegebenen Anforderung zur Ablieferung eines Postens elektronischer Inhaltsinformationen;
Konsultieren (210) der Registrierdatenbank, um zu bestimmen, ob der Posten von lokalem Speicher in einer anderen der mehreren Datenverarbeitungseinrichtungen verfügbar ist;
wenn der Posten gemäß der Registrierdatenbank von dem lokalen Speicher in der anderen Datenverarbeitungseinrichtung verfügbar ist, Umlenken (216) der Anforderung zu der anderen Datenverarbeitungseinrichtung und Registrieren (222) einer Verfügbarkeit des Postens aus dem lokalen Speicher der spezifischen Datenverarbeitungseinrichtung in der Registrierdatenbank, wenn die andere Datenverarbeitungseinrichtung den angeforderten Posten als Reaktion auf die umgelenkte Anforderung an die spezifische Datenverarbeitungseinrichtung geliefert hat (218); und
wenn der Posten gemäß der Registrierdatenbank nicht von lokalem Speicher in irgendeiner der mehreren Datenverarbeitungseinrichtungen verfügbar ist:
Weiterleiten (212) der Anforderung zu der Quelle; Überwachen einer Antwort von der Quelle auf die Anforderung in dem Zugangsnetzwerk; und
Registrieren (214) einer Verfügbarkeit des Postens von dem lokalen Speicher der spezifischen Datenverarbeitungseinrichtung in der Registrierdatenbank, wenn die Quelle den Posten als Reaktion auf die Anforderung an die spezifische Datenverarbeitungseinrichtung abgeliefert hat.

4. Knoten nach Anspruch 3, der für Folgendes ausgelegt ist:
wenn die andere Datenverarbeitungseinrichtung nicht den angeforderten Posten als Reaktion auf die umgelenkte Anforderung an die spezifische Datenverarbeitungseinrichtung liefert:
Aktualisieren (220) der Registrierdatenbank, um anzuzeigen, dass der angeforderte Posten von der anderen Datenverarbeitungseinrichtung nicht verfügbar ist; und
Konsultieren (210) der Registrierdatenbank, um zu bestimmen, ob der Posten von lokalem Speicher in einer weiteren der mehreren Datenverarbeitungseinrichtungen verfügbar ist.

5. Steuersoftware auf einem computerlesbaren Medium, wobei
die Steuersoftware für die Steuerung des Betriebs eines Knotens in einem Zugangsnetzwerk ausgelegt ist;
das Zugangsnetzwerk betrieben wird, um mehrere Datenverarbeitungseinrichtungen (102) mit einem Datennetzwerk (114) zu verbinden;
jede jeweilige (104, 106, 108) der mehreren Datenverarbeitungseinrichtungen einen jeweiligen lokalen Speicher (118, 120, 122) umfasst;
der Knoten eine Registrierdatenbank (124) umfasst; und
die Steuersoftware Folgendes umfasst:
erste Anweisungen zum Überwachen (202) einer durch eine spezifische der mehreren Datenverarbeitungseinrichtungen an eine Quelle in dem Datennetzwerk ausgegebenen Anforderung zur Ablieferung eines Postens elektronischer Inhaltsinformationen;
zweite Anweisungen zum Konsultieren (210) der Registrierdatenbank, um zu bestimmen, ob der Posten von lokalem Speicher in einer anderen der mehreren Datenverarbeitungseinrichtungen verfügbar ist;
dritte Anweisungen zum Umlenken (216) der Anforderung zu der anderen Datenverarbeitungseinrichtung und Registrieren (222) einer Verfügbarkeit des Postens von dem lokalen Speicher der spezifischen Datenverarbeitungseinrichtung in der Registrierdatenbank, wenn die andere Datenverarbeitungseinrichtung den angeforderten Posten als Reaktion auf die umgelenkte Anforderung an die spezifische Datenverarbeitungseinrichtung geliefert hat (218), wenn der Posten gemäß der Registrierdatenbank von dem lokalen Speicher in der anderen Datenverarbeitungseinrichtung verfügbar ist; und
vierte Anweisungen für Folgendes, wenn der Posten gemäß der Registrierdatenbank nicht von lokalem Speicher in irgendeiner der mehreren Datenverarbeitungseinrichtungen verfügbar ist:
Weiterleiten (212) der Anforderung zu der Quelle;
Überwachen einer Antwort von der Quelle auf die Anforderung in dem Zugangsnetzwerk; und
Registrieren (214) einer Verfügbarkeit des Postens von dem lokalen Speicher der spezifischen Datenverarbeitungseinrichtung in der Registrierdatenbank, wenn die Quelle als Reaktion auf die Anforderung den Posten an die spezifische Datenverarbeitungseinrichtung abgeliefert hat.

6. Steuersoftware nach Anspruch 6, die fünfte Anweisungen für Folgendes umfasst, wenn die andere Datenverarbeitungseinrichtung den angeforderten Posten nicht als Reaktion auf die umgeleitete Anforderung an die spezifische Datenverarbeitungseinrichtung liefert:
Aktualisieren (220) der Registrierdatenbank, um anzuzeigen, dass der angeforderte Posten nicht von der anderen Datenverarbeitungseinrichtung verfügbar ist; und Konsultieren (210) der Registrierdatenbank, um zu bestimmen, ob der Posten von lokalem Speicher in einer weiteren der mehreren Datenverarbeitungseinrichtungen verfügbar ist.

## Revendications

1. Procédé (200) de commande de la délivrance d'une information de contenu électronique depuis une source (112) sur un réseau de données (114) par l'intermédiaire d'un réseau d'accès (116) à une pluralité de dispositifs de traitement de données (102) connectés au réseau d'accès, dans lequel :
chaque dispositif respectif (104, 106, 108) de la pluralité de dispositifs de traitement de données comprend une mémorisation locale respective (118, 120, 122) **caractérisé en ce que**
le réseau d'accès comprend un registre (124) ;
le procédé comprend :
la surveillance (202) dans le réseau d'accès d'une requête délivrée par un dispositif spécifique de la pluralité de dispositifs de traitement de données à la source pour la délivrance de l'information ;
la consultation (210) du registre pour déterminer que l'information existe ou non dans une mémoire locale dans un autre dispositif de la pluralité de dispositifs de traitement de données connectés au même réseau d'accès ;
si l'information existe dans la mémoire locale dans l'autre dispositif de traitement de données en fonction du registre, le réacheminement (216) de la requête vers l'autre dispositif de traitement de données, et l'enregistrement (222) dans le registre de l'existence de l'information dans la mémoire locale du dispositif de traitement de données spécifique quand l'autre dispositif de traitement de données a fourni (218) l'information requise au dispositif de traitement de données spécifique en réponse à la requête réacheminée ; et
si l'information n'existe pas dans la mémoire locale d'aucun dispositif de la pluralité de dispositifs de traitement de données en fonction du registre :
l'acheminement (212) de la requête jusqu'à la source ;
la surveillance dans le réseau d'accès d'une réponse par la source à la requête ; et
l'enregistrement (214) dans le registre de l'existence de l'information dans la mémoire locale du dispositif de traitement de données spécifique quand la source a délivré l'information au dispositif de traitement de données spécifique en réponse à la requête.

2. Procédé selon la revendication 1, comprenant :
si l'autre dispositif de traitement de données ne fournit pas au dispositif de traitement de données spécifique l'information requise en réponse à la requête réacheminée :
l'actualisation (220) du registre pour indiquer que l'information requise n'existe pas dans l'autre dispositif de traitement de données ; et
la consultation (210) du registre pour déterminer que l'information existe dans la mémoire locale dans encore un autre dispositif de la pluralité de dispositifs de traitement de données.

3. Noeud dans un réseau d'accès, dans lequel :
le réseau d'accès sert à connecter une pluralité de dispositifs de traitement de données (102) à un réseau de données (114)
chaque dispositif respectif (104, 106, 108) de la pluralité de dispositifs de traitement de données comprend une mémoire locale respective (118, 120, 122) ;
le noeud comprend un registre (124) ;
le noeud est configuré pour :
surveiller (202) une requête délivrée par un dispositif spécifique de la pluralité de dispositifs de traitement de données par l'intermédiaire du réseau d'accès à une source sur le réseau de données pour la délivrance d'une information de contenu électronique ;
consulter (210) le registre pour déterminer que l'information existe ou non dans une mémoire locale dans un autre dispositif de la pluralité de dispositifs de traitement de données ;
si l'information provient de la mémoire locale dans l'autre dispositif de traitement de données en fonction du registre, réacheminer (216) la requête vers l'autre dispositif de traitement de données, et enregistrer (222) dans le registre l'existence de l'information dans la mémoire locale du dispositif de traitement de données spécifique quand l'autre dispositif de traitement de données a fourni (218) l'information requise au dispositif de traitement de données en réponse à la requête réacheminée ; et
si l'information n'existe pas dans la mémoire locale d'aucun dispositif de la pluralité de dispositifs de traitement de données en fonction du registre :
acheminer (212) la requête jusqu'à la source ;
surveiller dans le réseau d'accès une réponse par la source à la requête ; et
enregistrer (214) dans le registre l'existence de l'information dans la mémoire locale du dispositif de traitement de données spécifique quand la source a délivré l'information au dispositif de traitement de données spécifique en réponse à la requête.

4. Noeud selon la revendication 3, configuré pour :
si l'autre dispositif de traitement de données ne fournit pas au dispositif de traitement de données spécifique l'information requise en réponse à la requête réacheminée :
actualiser (220) le registre pour indiquer que l'information requise n'existe pas dans l'autre dispositif de traitement de données ; et
consulter (210) le registre pour déterminer que l'information provient de la mémoire locale dans encore un autre dispositif de la pluralité de dispositifs de traitement de données.

5. Logiciel de commande sur un support lisible par ordinateur, dans lequel :
le logiciel de commande est configuré pour commander le fonctionnement d'un noeud dans un réseau d'accès ;
le réseau d'accès sert à connecter une pluralité de dispositifs de traitement de données (102) à un réseau de données (114) ;
chaque dispositif respectif (104, 106, 108) de la pluralité de dispositifs de traitement de données comprend une mémoire locale respective (118, 120, 122) ;
le noeud comprend un registre (124) ;
le logiciel de commande comprend :
des premières instructions pour surveiller (202) une requête délivrée par un dispositif spécifique de la pluralité de dispositifs de traitement de données par l'intermédiaire du réseau d'accès à une source sur le réseau de données pour la délivrance d'une information de contenu électronique ;
des deuxièmes instructions pour consulter (210) le registre pour déterminer que l'information existe ou non dans une mémoire locale dans un autre dispositif de la pluralité de dispositifs de traitement de données ;
des troisièmes instructions pour réacheminer (216) la requête vers l'autre dispositif de traitement de données, et enregistrer (222) dans le registre l'existence de l'information dans la mémoire locale du dispositif de traitement de données spécifique quand l'autre dispositif de traitement de données a fourni (218) l'information requise au dispositif de traitement de données spécifique en réponse à la requête réacheminée, si l'information existe dans la mémoire locale de l'autre dispositif de traitement de données en fonction du registre ; et
des quatrièmes instructions pour, si l'information n'existe pas dans la mémoire locale d'aucun dispositif de la pluralité de dispositifs de traitement de données en fonction du registre :
acheminer (212) la requête jusqu'à la source ;
surveiller dans le réseau d'accès une réponse par la source à la requête ; et
enregistrer (214) dans le registre l'existence de l'information dans la mémoire locale du dispositif de traitement de données spécifique quand la source a délivré l'information au dispositif de traitement de données spécifique en réponse à la requête.

6. Logiciel de commande selon la revendication 6, comprenant des cinquièmes instructions pour, si l'autre dispositif de traitement de données ne fournit pas au dispositif de traitement de données spécifique l'information requise en réponse à la requête réacheminée, actualiser (220) le registre pour indiquer que l'information requise n'existe pas dans l'autre dispositif de traitement de données ; et consulter (210) le registre pour déterminer que l'information existe dans la mémoire locale d'encore un autre dispositif de la pluralité de dispositifs de traitement de données.
